# EUROPEAN PATENT SPECIFICATION

(11) **EP 4 492 560 B1**
(45) Date of publication and mention of the grant of the patent: **02.09.2026**
(21) Application number: 24188280.2
(22) Date of filing: 12.07.2024
(51) Int. Cl.: H01M 50/533, H01M 50/534, H01M 50/536, H01M 50/538, H01M 50/54, H01M 50/541

(54) **STRAP STRUCTURES FOR BATTERY, BATTERY AND ASSEMBLY COMPRISING THE SAME**
BANDSTRUKTUREN FÜR BATTERIE, BATTERIE UND ANORDNUNG DAMIT
STRUCTURES DE SANGLE POUR BATTERIE, BATTERIE ET ENSEMBLE LES COMPRENANT

(30) Priority: 14.07.2023 US 202363513667 P
(43) Date of publication of application: 15.01.2025
(73) Proprietor: Trojan Battery Company LLC, Santa Fe Springs, CA 90670 (US)
(72) Inventor: Tang, Chen, Shanghai, 201419 (CN); Du, Qian, Shanghai, 201419 (CN); Zhou, Haitao, Shanghai, 201419 (CN); Zhang, Xingyu, Shanghai, 201419 (CN)
(74) Representative: Patentanwälte Ruff, Wilhelm, Beier, Dauster & Partner mbB

(56) References cited:
- EP-B1- 1 497 874
- WO-A1-2016/013163
- US-A- 3 836 401
- US-A1- 2007 009 790

## Description

### PRIORITY CLAIM AND CROSS-REFERENCE

This application claims the benefit of U.S. Provisional Application No. 63/513,667, filed July 14, 2023.

### FIELD OF THE INVENTION

The disclosure relates to batteries generally. More particularly, the disclosed subject matter relates to a strap structure for a battery such as a lead acid battery, a battery or a battery assembly comprising the same, and methods for making such a battery or battery assembly.

### BACKGROUND

Storage batteries are provided for storing electrical energy for use by vehicles. Lead acid, nickel-metal hydride, and lithium-ion batteries are three types of storage batteries for potential applications of electric vehicles (EV), hybrid electric vehicles (HEV), and plug-in hybrid electric vehicles (PHEV). Though lithium-ion batteries have high specific energy (Watt-hour/kilogram, Wh/kg) and have been broadly used in small electronic devices, such as cell phones and laptops, their high cost, performance, abuse tolerance and cycle life hamper them to be used in EV, HEV, and PHEV. Lithium-ion batteries are expensive and hard to be recycled. The cost of nickel-metal hydride batteries is high and their specific energy and cell efficiency are low although they have been used in HEV.

Most of current automotive storage batteries are lead acid batteries due to their inexpensive, high power, reliable, and 98% recycling properties. However, the low specific energy and short cycle life of current commercial lead acid batteries resist them from being used for EV, HEV, and PHEV applications. If the specific energy and cycle life of the lead acid battery can be greatly increased, lead acid batteries should have a great advantage on other types of storage batteries. Therefore, it is desirable to develop low cost advanced lead acid batteries with high specific energy and long cycle life for EV, HEV, PHEV, golf carts, and other applications. US2007/009790 A1 discloses a battery and a strap kit.

### SUMMARY OF THE INVENTION

The present disclosure provides a set of strap structures, a battery comprising the same, and a method of making a battery.

In accordance with some embodiments, a battery is provided. Such a battery may be a lead acid battery, which is rechargeable in some embodiments. Such a battery comprises a housing, a plurality of cells disposed inside the housing, and a set of strap structures. Each of the plurality of cells comprises a plurality of positive electrode plates and a plurality of negative electrode plates. Each respective electrode plate has a respective tip. The housing (or called case) may include cell dividers to accommodate the cells. The set of strap structures are disposed above the electrode plates and connected with the tips of the electrode plates.

The set of strap structures comprises one or more of a first strap structure (or a first type of strap structure). The first strap structure comprises a positive strap line, a negative strap line, and at least two bridging lines disposed between and connected with the positive strap line and the negative strap line. The negative strap line is connected with respective tips of a plurality of negative electrode plates in a first cell. The positive strap line is connected with respective tips of a plurality of positive electrode plates in a second cell, which is adjacent to and different from the first cell.

In the first strap structure, the positive strap line and the negative strap line in the first strap structure are parallel or substantially parallel to each other. Each of the positive strap line and the negative strap line has a notch or hole (or holes) configured to fit with electrode tips. For example, the negative strap line has a notch on one side configured to fit with the respective tips of the plurality of negative electrode plates in the first cell. The positive strap line has a notch on one side configured to fit with the respective tips of the plurality of positive electrode plates in the second cell. The at least two bridging lines disposed between the positive strap line and the negative strap line are parallel or substantially parallel to each other in some embodiments. The at least two bridging lines may be in any suitable number. For example, the first strap structure may include two, three, or four bridging lines.

In some embodiments, the set of strap structures further comprises a second strap structure connected with a plurality of positive electrodes in a starting cell, and a third strap structure connected with a plurality of negative electrodes in one ending cell. The second strap structure is connected with a positive terminal post of the battery. The third strap structure is connected with a negative terminal post of the battery.

In some embodiments, the set of strap structures further comprises a fourth strap structure, which is connected with respective tips of a plurality of negative electrode plates and a plurality of positive electrode plates from two adjacent cells. In some embodiments, each of the second strap structure, the third strap structure, and the fourth strap structure may have a shape of a straight strip. The fourth strap structure may have a length twice of that of the second or third strap structure.

In some embodiments, the fourth strap structure is at one end of the battery opposite to that of the positive and negative terminal posts of the battery.

Each of the set of strap structures may be molded or cast from a material selected from the group consisting of lead, lead calcium tin, lead tin, or any combination thereof.

The battery may include any suitable cells. For example, in some embodiments, the battery includes six cells. The set of strap structures comprises four of the first type of strap structure. The set of strap structures further comprises one for each of the second, the third, and the fourth strap structures.

In another aspect, a strap structure and a set of strap structures are provided. Such a strap structure, i.e., the first type of strap structure as described herein, is in the set of strap structures configured to be disposed in a battery. The battery also comprises a housing and a plurality of cells disposed inside the housing. Each of the plurality of cells comprises a plurality of positive electrode plates and a plurality of negative electrode plates. Each respective electrode plate has a respective tip. The first strap structure includes a positive strap line, a negative strap line, and at least two bridging lines disposed between and connected with the positive strap line and the negative strap line. The negative strap line is configured to be connected with respective tips of a plurality of negative electrode plates in a first cell. The positive strap line is configured to be connected with respective tips of a plurality of positive electrode plates in a second cell different from the first cell.

In some embodiments, the positive strap line and the negative strap line in the first strap structure are parallel or substantially parallel to each other. The negative strap line may have has a notch or holes on one side configured to fit with the respective tips of the plurality of negative electrode plates in the first cell. The positive strap line may have a notch or holes on one side configured to fit with the respective tips of the plurality of positive electrode plates in the second cell. The at least two bridging lines disposed between the positive strap line and the negative strap line are parallel or substantially parallel to each other in some embodiments. The at least two bridging lines may be two, three, or four bridging lines. Such a strap structure is a unitary molded or cast structure and comprises a material selected from the group consisting of lead, lead calcium tin, lead tin, or any combination thereof.

In another aspect, a method for forming the battery as described herein is provided. Such a method comprises assembling the set of strap structures onto the plurality of cells. The negative strap line in the first strap structure is connected with respective tips of a plurality of negative electrode plates in a first cell. The positive strap line in the first strap structure is connected with respective tips of a plurality of positive electrode plates in a second cell.

The method further comprises placing the set of strap structures and the plurality of cells inside the housing to form a partially assembled structure, and placing the partially assembled structure upside down to contact a back side of a cover. An encapsulant is dispensed onto the back side of the cover, which is also placed upside down. The encapsulant is cured when the components are assembled. A resulting battery is formed.

In some embodiments, the battery is a lead acid battery. The battery may include any suitable number of cells. In some embodiments, the battery includes six cells, and the set of strap structures comprises four of the first strap structure. In the first strap structure, the at least two bridging lines disposed between the positive strap line and the negative strap line are parallel or substantially parallel to each other. The at least two bridging lines comprises two, three, or four bridging lines.

In some embodiments, the set of strap structures further comprises a second strap structure and a third strap structure. The step of assembling the set of strap structures onto the plurality of cells further comprises connecting the second strap structure with a plurality of positive electrodes in a starting cell, and connecting the third strap structure with a plurality of negative electrodes in one ending cell. The set of strap structures further comprises a fourth strap structure. The step of assembling the set of strap structures onto the plurality of cells further comprises connecting respective tips of a plurality of negative electrode plates and a plurality of positive electrode plates from two adjacent cells.

The set of strap structures including the first type of strap structure as described herein and the resulting battery provide many advantages. For example, each strap structure is casted or molded in one piece. The amount of lead or lead alloy used is reduced compared to that in the existing technology, in which an L-shaped through-wall welding process is used. The method described herein eliminates the defective rate caused by the through-wall welding process because no welding process is used, and provides a more stable positive and negative connections. The one-piece casting technique used herein reduces the internal resistance of the connection and can meet the requirements of higher powder discharge. The design of the strap structures significantly improves the corrosion resistance of the strap structures and resulting batteries. Furthermore, even if one portion is corroded, for example, one bridging line is corroded to cause breakage, the overall performance of the battery is not significantly affected.

### BRIEF DESCRIPTION OF THE DRAWINGS

The present disclosure is best understood from the following detailed description when read in conjunction with the accompanying drawings. It is emphasized that, according to common practice, the various features of the drawings are not necessarily to scale. On the contrary, the dimensions of the various features are arbitrarily expanded or reduced for clarity. Like reference numerals denote like features throughout specification and drawings.
FIG. 1 is an exploded view illustrating an exemplary battery in accordance with some embodiments.
FIG. 2 is a sectional view illustrating a portion of the exemplary battery of FIG. 1 comprising exemplary strap structures in accordance with some embodiments.
FIG. 3 is a sectional view illustrating a portion of the exemplary battery of FIG. 1 comprising exemplary strap structures in accordance with some embodiments.
FIG. 4 is a magnified view of a portion of FIG. 3.
FIGS. 5-6 are sectional views showing two terminal posts in the exemplary battery of FIG. 1.
FIG. 7 is a perspective view showing an exemplary case in the exemplary battery of FIG. 1.
FIGS. 8-9 are perspective views showing an exemplary cell in some embodiments.
FIG. 10 is a plan view showing the exemplary cell of FIGS. 8-9.
FIG. 11 is a plan view showing a set of exemplary strap structures in accordance with some embodiments.
FIG. 12 is a perspective view showing an exemplary strap structure in accordance with some embodiments.
FIG. 13 is a perspective view illustrating a structure having the set of exemplary strap structures disposed on a series of cells for a battery in accordance with some embodiments.
FIGS. 14-15 are perspective views illustrating the structure of FIG. 13 disposed inside the case of FIG. 7.
FIG. 16 is a top plan view illustrating the structure of FIG. 15.
FIG. 17 is a perspective view illustrating the structure of FIG. 15 placed upside down to be assembled with a cover with an encapsulant.
FIG. 18 is a plan view illustrating the cover shown in FIG. 17.
FIG. 19 is a perspective view (view from bottom) illustrating the cover of FIG. 18.
FIG. 20 is a partially cutaway perspective view illustrating the exemplary battery of FIG. 1 after assembled.
FIG. 21 is a flow chart showing an exemplary method for making a battery in accordance with some embodiments.

### DETAILED DESCRIPTION

This description of the exemplary embodiments is intended to be read in connection with the accompanying drawings, which are to be considered part of the entire written description. In the description, relative terms such as "lower," "upper," "horizontal," "vertical,", "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description and do not require that the apparatus be constructed or operated in a particular orientation. Terms concerning attachments, coupling and the like, such as "connected" and "interconnected," refer to a relationship wherein structures are secured or attached to one another either directly or indirectly through intervening structures, as well as both movable or rigid attachments or relationships, unless expressly described otherwise.

In the present disclosure the singular forms "a," "an," and "the" include the plural reference, and reference to a particular numerical value includes at least that particular value, unless the context clearly indicates otherwise. When values are expressed as approximations, by use of the antecedent "about," it will be understood that the particular value forms another embodiment. As used herein, "about X" (where X is a numerical value) preferably refers to ±10% of the recited value, inclusive. For example, the phrase "about 8" preferably refers to a value of 7.2 to 8.8, inclusive. Where present, all ranges are inclusive and combinable. For example, when a range of "1 to 5" is recited, the recited range should be construed as including ranges "1 to 4", "1 to 3", "1-2", "1-2 & 4-5", "1-3 & 5", "2-5", and the like. In addition, when a list of alternatives is positively provided, such listing can be interpreted to mean that any of the alternatives may be excluded, e.g., by a negative limitation in the claims. For example, when a range of "1 to 5" is recited, the recited range may be construed as including situations whereby any of 1, 2, 3, 4, or 5 are negatively excluded; thus, a recitation of "1 to 5" may be construed as "1 and 3-5, but not 2", or simply "wherein 2 is not included." It is intended that any component, element, attribute, or step that is positively recited herein may be explicitly excluded in the claims, whether such components, elements, attributes, or steps are listed as alternatives or whether they are recited in isolation.

The term "substantially parallel" used herein refers to being parallel with a deviation within 10° or less such as within 5° or less. The term "substantially normal" or "substantially perpendicular" used herein refers to being normal or perpendicular with a deviation within 10° or less such as within 5° or less.

The terms "positive" and "negative" such as "positive electrode plates" and "negative electrode plates" used herein can be interchangeable. In the exemplary battery described herein, the "negative electrode plates" can be switched to the "positive electrode plates" and the "positive electrode plates" can be switched to the "negative electrode plates."

A lead acid battery includes at least one cell having one or more positive plates and one or more negative plates, which are made of lead or lead alloy plates. A lead oxide paste may be applied to the positive plates. A lead oxide paste with the addition of powdered sulfates may be applied to the negative plates. Porous separators can be used to stop the negative and positive plates touching each other but allow ions to move between them. A positive strap may be used to connect the positive plates together in each cell and a negative strap may be used to connect the negative plates together in each cell. A cell connector may be used to join the positive strap of one cell to the negative strap of the next cell. An electrolyte such as a solution or gel containing sulfuric acid is used to facilitate the electrochemical reactions between positive and negative plates in each cell.

The cells are enclosed in a case and covered with a lid. The case and the lid can be made of a plastic materials such as polypropylene. Terminal posts are configured to connect the battery to an object such as an appliance, a device, or a circuit, where electricity is needed. The terminal posts carry the electrical current into the battery (charge) and from the battery (discharge).

A lead acid battery may also include a current collector (CC) inside each cell. The current collectors are bridging components that collect electrical current generated at the electrodes and connect with external circuits. The current-collectors may hold the active-materials on an electrode, the strap, and terminal posts.

The terms "strap," "strap structure," and "strap layout" used herein are understood to encompass a conductive structure disposed outside one or more cells and connected with tips of a plurality of anodes, or a plurality of cathodes, or a plurality of anodes and a plurality of cathodes together. For example, a positive strap is used to connect the tips of a plurality of positive electrodes together. A negative strap is used to connect the tips of a plurality of negative electrodes together. Each electrode may be a plate with one tip in some embodiments. Each of a positive strap and a negative stay may be casted in one piece and may have a notch on one side to fit with the tips of the electrodes. A strap structure as described herein may be a structure having a specific configuration configured to connect the tips of a plurality of negative electrodes in a first cell on one side, connect the tips of a plurality of positive electrodes in a second cell on an opposite side, and also configured to connect both series of tips together. A cell connector may not be needed. A strap, strap structure, or strap layout may be made of a suitable material such as lead, lead calcium tin, lead tin, or other lead alloys. A strap, strap structure, or strap layout may be considered as a portion of current collectors or referred as electrode current collectors. However, a strap, strap structure, or strap layout described herein is different from a current collector used inside an electrochemical cell.

A current collector disposed inside an electrochemical cell may be optional, and may be a grid structure in some embodiments. The grid made of a lead or lead-alloy material is configured to hold the positive or negative active material within the grid structure, carrying the discharge current out of the active material and the recharge current back into the active material. The grid may hold the active material securely and resist the expansion forces produced during electrochemical reactions, for example, when the active material PbO₂ is converted to PbSO₄ in the positive grid and Pb to PbSO₄ in the negative grid.

Unless expressly indicated otherwise, the terms "battery" and "battery assembly" are used interchangeably, and the term "cell" used herein refers to an electrode group comprising a plurality of positive plates and a plurality of negative plates. The term "electrochemical cell" used herein refers to a subunit between a positive plate and a negative plate. For the convenience of description, the terms "cell" and "electrochemical cell" may be sometimes used interchangeably.

A strap structure may corrode during use and must minimize corrosion, retain its shape, and retain a good bond between it and the electrodes to prevent degradation of a battery. A strap structure must withstand corrosion in elevated operating temperatures and extensive cycling.

The present disclosure provides a unique strap structure, a set of strap structures comprising the same, a battery or battery assembly comprising the same, and a method of making a battery or batter assembly.

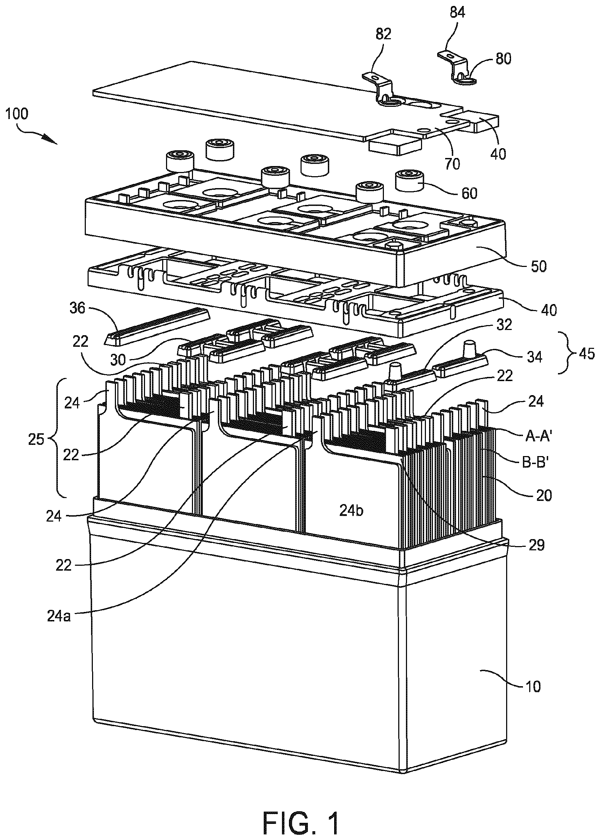

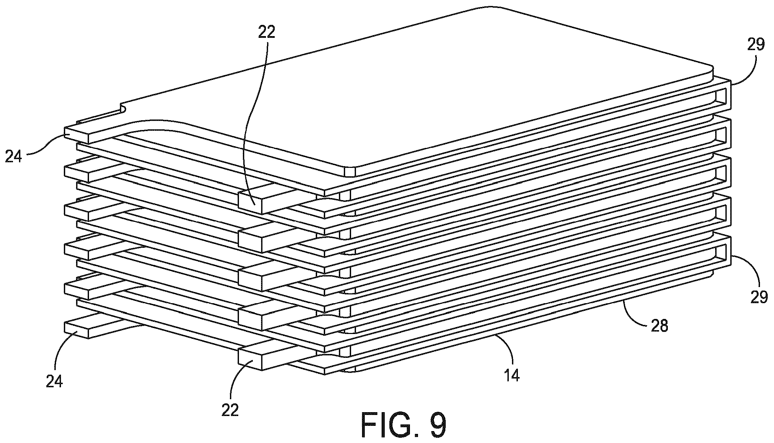

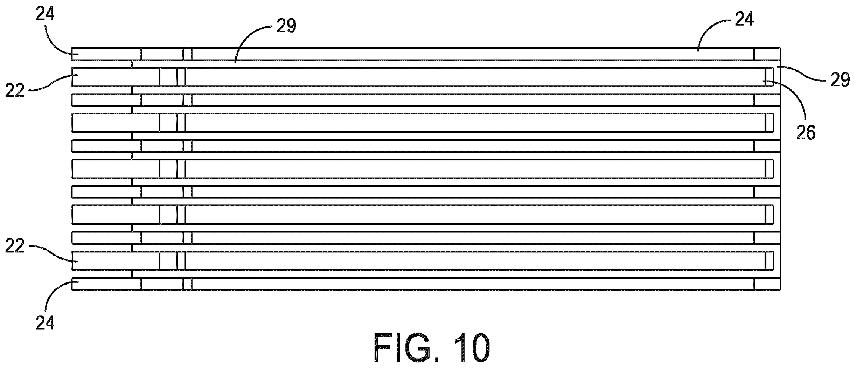

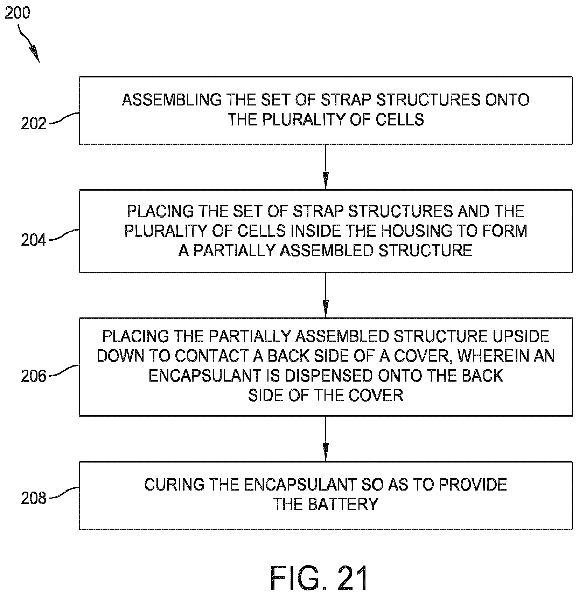

In FIGS. 1-20, like items are indicated by like reference numerals, and for brevity, descriptions of the structure, provided above with reference to the preceding figures, are not repeated. The methods described in FIG. 21 are described with reference to the exemplary structure described in FIGS. 1-20.

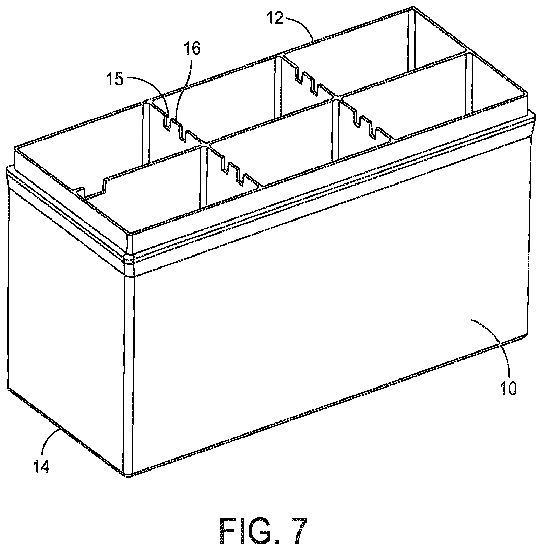

Referring to FIG. 1, an exemplary battery 100 in accordance with some embodiments is illustrated. Such a battery 100 may be a lead acid battery, which is rechargeable in some embodiments. The exemplary battery 100 comprises a housing 10 (or called case), a plurality of cells 20 disposed inside the housing 10, and a set of strap structures 45. Referring to FIG. 7, the housing 10 may include an exterior wall 12, a bottom wall 14, and cell dividers 16 to divide the housing 10 to accommodate the cells 20. The cell dividers 16 may define one or two notches 15 thereon.

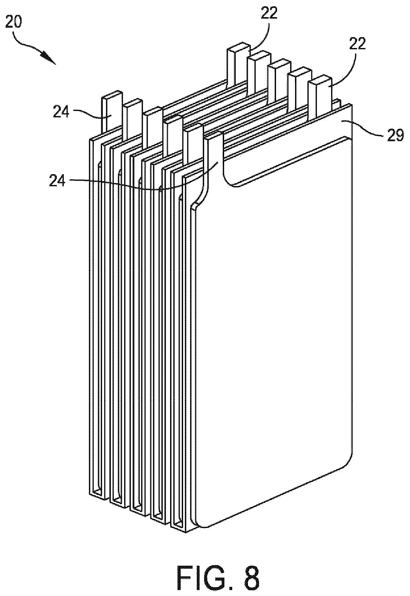

Each of the plurality of cells 20 comprises a plurality of positive electrode plates 22 and a plurality of negative electrode plates 24. Each respective electrode plate has a respective tip. A positive electrode plate 22 includes a tip 22a and a body portion 22b. A negative electrode plate 24 includes a tip 24a and a body portion 24b. The electrode plates are labeled as 25 and the respective tips are labeled as 25a. Referring to FIGS. 8-10, an exemplary cell 20 is illustrated. A cell 20 may include any suitable number of positive and negative electrode plates. For example, as shown in FIGS. 8-10, the exemplary cell 20 comprises five positive electrode plates 22 and six negative electrode plates 24. A separator 29 is disposed between a positive electrode plate 22 and a negative electrode plate 24.

The positive plates and negative plates may be made of any suitable materials, which may be lead or lead alloy such as lead-tin-calcium-aluminum alloy. The separators 29 may be absorbent glass absorbed mat including glass fibers. The housing 10 and the cover 50 for the battery may be made of a plastic such as acrylonitrile butadiene styrene (ABS) or polyolefins such as polypropylene.

The active material in the positive plates may be lead dioxide and that in the negative plates may be metallic sponge lead. When an electrical circuit is created, these materials react with sulfuric acid during charging and discharging according to a chemical reaction: PbO₂ + Pb +2 H₂SO4 = 2 PbSO₄ +2 H₂O. On the positive electrode plates and negative electrode plates, the following electrochemical reactions may occur:
Positive discharge: 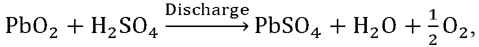
Positive charge: 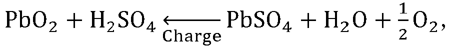
Negative discharge: 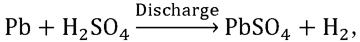
Negative charge:

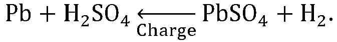

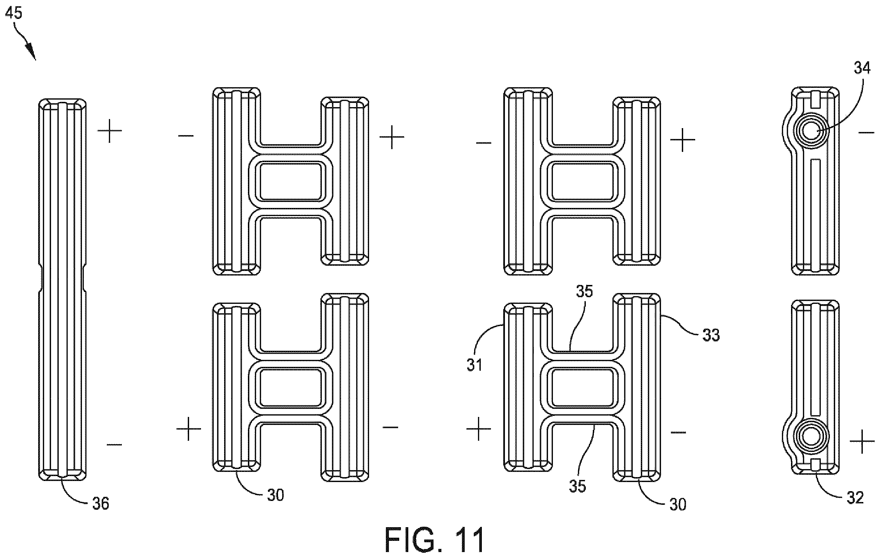

Referring back to FIG. 1, the set of strap structures 45 are disposed above the electrode plates 25 and connected with the tips 25a of the electrode plates 25. An exemplary set of strap structures is illustrated in FIG. 11.

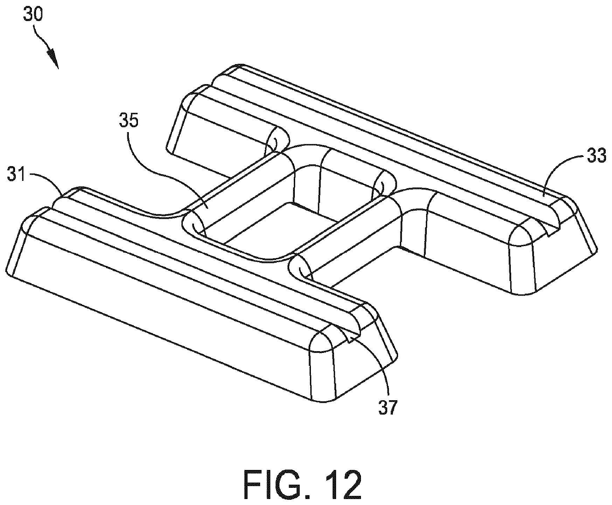

Referring to FIGS. 1 and 11, the set of strap structures 25 comprises one or more of a first strap structure 30 (or a first type of strap structure). As shown in FIGS. 11 and 12, the first strap structure 30 comprises a positive strap line 31, a negative strap line 33, and at least two bridging lines 35 disposed between and connected with the positive strap line 31 and the negative strap line 33. In the first strap structure 30, the positive strap line 31 and the negative strap line 33 are parallel or substantially parallel to each other. The at least two bridging lines 35 disposed between the positive strap line 31 and the negative strap line 33 are parallel or substantially parallel to each other in some embodiments. In some embodiments, the at least two bridging lines 35 may be substantially normal to the positive strap line 31 and the negative strap line 33. Two bridging lines 35 are shown in the figures for illustration purpose. The at least two bridging lines 35 may be in any suitable number. For example, the first strap structure 30 may include two, three, or four bridging lines 35.

Referring to FIGS. 11-12, the first strap structure 30 may have a shape of a number (or pound) sign ("#") with two sets of lines normal to each other or have a shape of a ladder. In some embodiments, the positive strap line 31 and the negative strap line 33 may have different lengths. As illustrated in FIGS. 11-12, the positive strap line 31 is shorter the negative strap line 33 because in each cell there are more negative plates 24 than the positive plates 22. In the figures including FIGS. 1, 7-10 and 13, each cell includes five positive plates 22 and six negative plates 24.

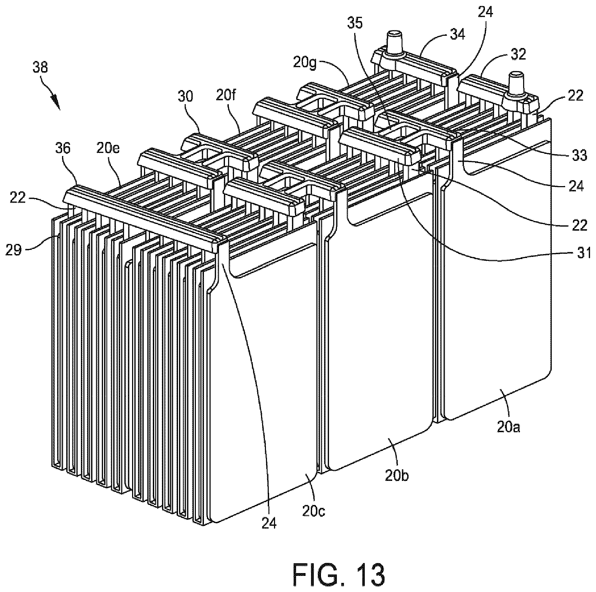

Referring to FIGS. 1 and 13, the negative strap line 33 in the first strap structure 30 is connected with respective tips 24a of a plurality of negative electrode plates 24 in a first cell 20a. The positive strap line 31 is connected with respective tips 22a of a plurality of positive electrode plates 22 in a second cell 20b, which is adjacent to and different from the first cell. The notches 15 on the cell divider 16 (FIG. 7) are configured to the bridging lines 35 in the first strap structure 30. A respective tip of an electrode plate is also called a plate lug, and the terms "tip" and "plate lug" can be used interchangeably in the present disclosure.

Each of the positive strap line 31 and the negative strap line 33 may optionally have a notch (not shown) on their back sides configured to fit with electrode tips. For example, the negative strap line 33 has a notch on one side configured to fit with the respective tips of the plurality of negative electrode plates 24 in the first cell 20a. The positive strap line 31 has a notch on one side configured to fit with the respective tips of the plurality of positive electrode plates 22 in the second cell 20b. In addition, each of the positive strap line 31 and the negative strap line 33 may optionally have a notch 37 in the front side, which may be used to define physical limits of the plate lugs.

Referring to FIGS. 1, 11, and 13, in some embodiments, the set of strap structures 45 further comprises a second strap structure 32 connected with a plurality of positive electrodes 22 in a starting cell 20a, and a third strap structure 34 connected with a plurality of negative electrodes 24 in one ending cell 20g. As illustrated in FIG. 13, the exemplary battery includes six cells 20a-20g. The second strap structure 32 is connected with a positive terminal post 82 (FIG. 1) of the battery 100. The third strap structure 34 is connected with a negative terminal post 84 of the battery 100.

In some embodiments, the set of strap structures 45 further comprises a fourth strap structure 36, which is connected with respective tips of a plurality of negative electrode plates 24 and a plurality of positive electrode plates 22 from two adjacent cells. In some embodiments, each of the second strap structure 32, the third strap structure 34, and the fourth strap structure 36 may have a shape of a straight strip. The fourth strap structure 36 may have a length twice of that of the second strap structure 32 or the third strap structure 34. Each of the second strap structure 32, the third strap structure 34, and the fourth strap structure 36 may also have notches in the back side to fit with electrode plate tips (or called plate lugs).

The battery 100 may include any suitable cells. For example, in some embodiments, the battery includes six cells. The set of strap structures 45 comprises four of the first type of strap structure 30. The set of strap structures further comprises one for each of the second, the third, and the fourth strap structures 32, 34, and 36.

Referring to FIGS. 1 and 11, in some embodiments, the fourth strap structure 36 is at one end of the battery opposite to that of the positive and negative terminal posts 82 and 84 of the battery 100.

Each of the set of strap structures may be molded or cast from a material selected from the group consisting of lead, lead calcium tin, lead tin, or any combination thereof. The first strap structure is a unitary molded structure, and is not welded onto the electrode plates

Referring to FIG. 1, in addition to terminal posts 80 such as positive terminal post 82 and negative terminal post 84, the exemplary battery 100 further comprises a cover 50, venting structures 60, a top cap 70, and a cured encapsulant 40. The cured encapsulant 40 is made of a crosslinked polymer such as epoxy, and is disposed between the cells and the cover 50. Electrode plate tips and the set of strap structures 45 are embedded in the cured encapsulant 40.

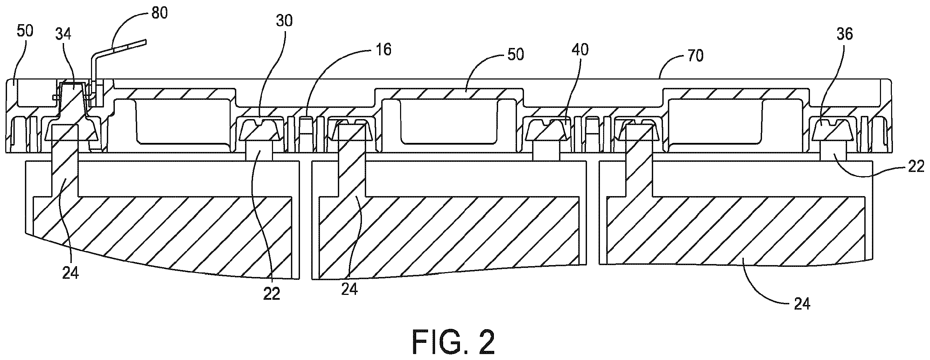

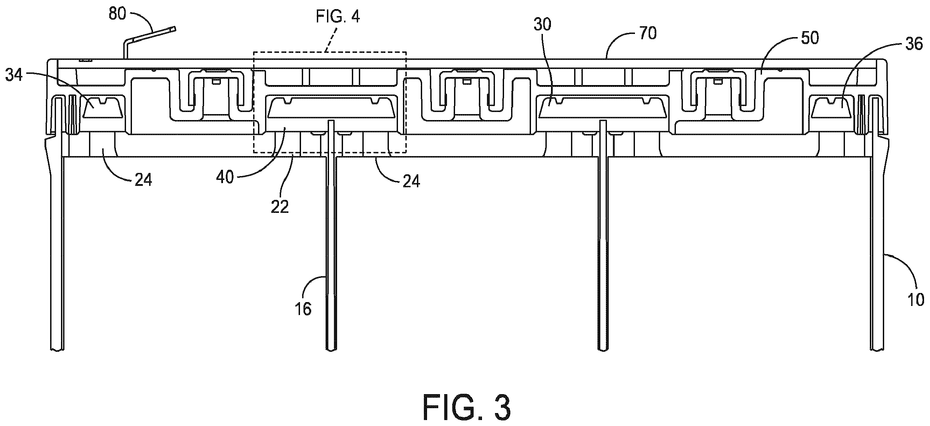

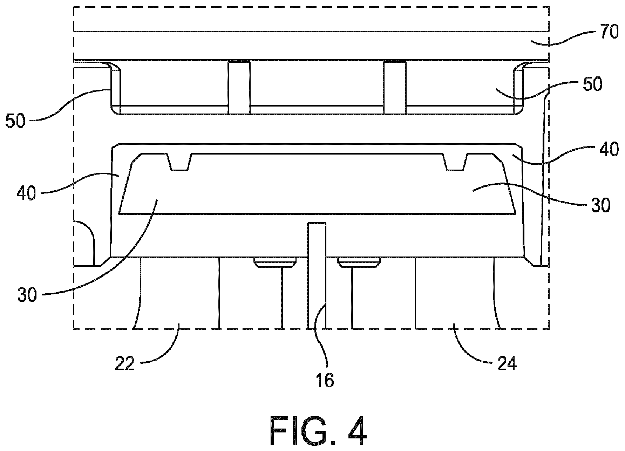

Referring to FIGS. 2, 3, and 4, sectional views of the exemplary battery 100 are shown. FIG. 2 is a sectional view along the direction A-A' as shown in FIG. 1. FIG. 3 is a sectional view along the direction B-B' as shown in FIG. 1. The sectional views in both FIG. 2 and FIG. 3 are rotated by 180 degree from that in FIG. 1 so that the terminal post 80 is shown on the left. FIG. 4 is a magnified view of a portion of FIG. 3. The strap structures including the first strap structure 30, the second strap structure 32 (not shown in FIGS. 2-4), the third strap structure 34, and the fourth strap structure 36 are connected with electrode plates and embedded in the encapsulant 40, which is used to seal and bond the cells, the cover 50 and the top cap 70. The third strap structure 34 is connected with respective tips of a plurality of negative electrode plates 24. The fourth strap structure 36 is connected with respective tips of a plurality of negative electrode plates 24 and a plurality of positive electrode plates 22 from two adjacent cells.

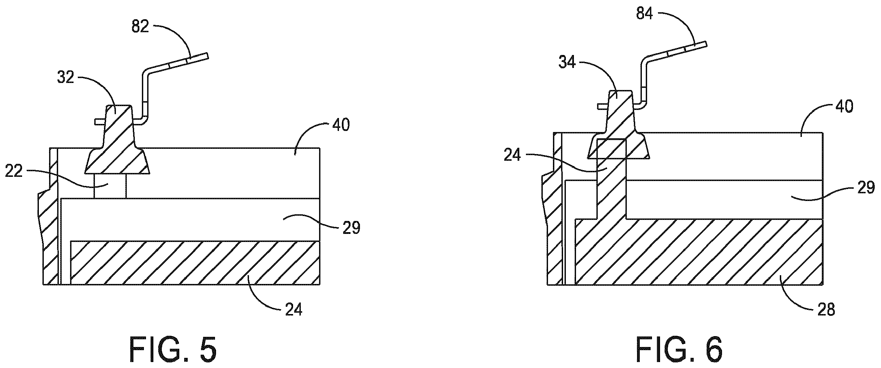

Referring to FIGS. 5-6, sectional views of a portion of the battery 100 are illustrated. The second strap structure 32 is connected with a plurality of positive electrodes 22 in a starting cell, and is connected with a positive terminal post 82 (FIG. 1) of the battery 100. The third strap structure 34 is connected with a plurality of negative electrodes 24 in one ending cell, and is connected with a negative terminal post 84 of the battery 100. As illustrated in FIGS. 5-6, the second strap structure 32 and the third strap structure 34 each may include a projection part for connecting with terminal posts 82 and 84, respectively.

In another aspect, the present disclosure also provides a strap structure such as the first strap structure 30 and the set of strap structures 45 described herein. Such a strap structure as the first type of strap structure 30 as described herein is in the set of strap structures configured to be disposed in a battery 100, which is a lead acid battery in some embodiments. The battery 100 also comprises a housing 10 and a plurality of cells 20 disposed inside the housing 10. Each of the plurality of cells 20 comprises a plurality of positive electrode plates 22 and a plurality of negative electrode plates 24. Each respective electrode plate has a respective tip. The first strap structure 30 includes a positive strap line 31, a negative strap line 33, and at least two bridging lines 35 disposed between and connected with the positive strap line 31 and the negative strap line 33. The negative strap line 33 is configured to be connected with respective tips of a plurality of negative electrode plates 24 in a first cell. The positive strap line 31 is configured to be connected with respective tips of a plurality of positive electrode plates 22 in a second cell different from the first cell.

In some embodiments, the positive strap line 31 and the negative strap line 33 in the first strap structure 30 are parallel or substantially parallel to each other. The negative strap line 33 may have has a notch configured to fit with the respective tips of the plurality of negative electrode plates 24 in the first cell. The positive strap line 31 may have a notch configured to fit with the respective tips of the plurality of positive electrode plates 22 in the second cell. The at least two bridging lines 35 disposed between the positive strap line 31 and the negative strap line 33 are parallel or substantially parallel to each other in some embodiments. The at least two bridging lines 35 may be two, three, or four bridging lines. Such a strap structure 30 is a unitary molded or cast structure and comprises a material selected from the group consisting of lead, lead calcium tin, lead tin, or any combination thereof.

The first strap structure 30 may have a shape of a number (or pound) sign ("#") with two sets of lines normal to each other or have a shape of a ladder. In some embodiments, the positive strap line 31 and the negative strap line 33 may not have the same length.

Referring to FIG. 21, an exemplary method 200 for forming the battery or battery assembly as described herein is provided.

At step 202, the set of strap structures 45 is assembled onto the plurality of cells 20. The resulting structure 38 is shown in FIG. 13. The negative strap line 33 in the first strap structure 30 is connected with respective tips of a plurality of negative electrode plates 24 in a first cell 20a. The positive strap line 31 in the first strap structure 30 is connected with respective tips of a plurality of positive electrode plates 22 in a second cell 20b.

In some embodiments, the battery is a lead acid battery. The battery may include any suitable number of cells. In some embodiments, the battery includes six cells, and the set of strap structures comprises four of the first strap structure 30. In the first strap structure 30, the at least two bridging lines 35 disposed between the positive strap line 31 and the negative strap line 34 are parallel or substantially parallel to each other. The at least two bridging lines 35 comprises two, three, or four bridging lines.

In some embodiments, the set of strap structures 45 further comprises a second strap structure 32 and a third strap structure 34. The step of assembling the set of strap structures onto the plurality of cells further comprises connecting the second strap structure 32 with a plurality of positive electrodes 22 in a starting cell, and connecting the third strap structure 34 with a plurality of negative electrodes 24 in one ending cell. The set of strap structures 45 further comprises a fourth strap structure 36. The step of assembling the set of strap structures onto the plurality of cells further comprises connecting respective tips of a plurality of negative electrode plates 24 and a plurality of positive electrode plates 22 from two adjacent cells.

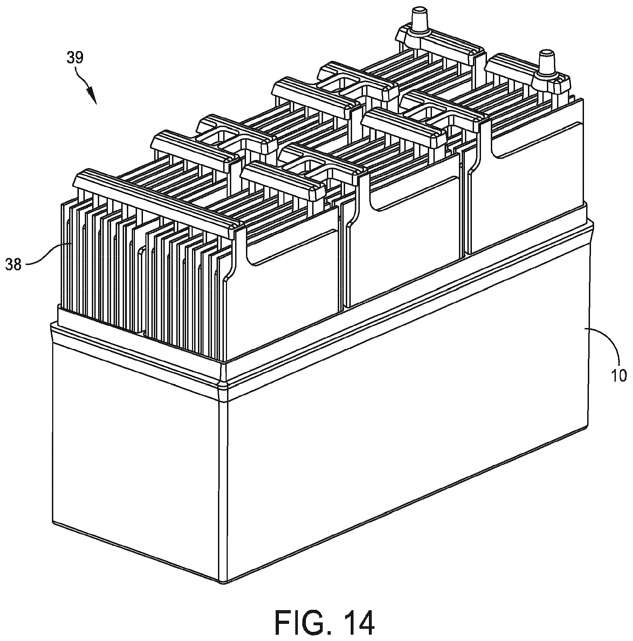

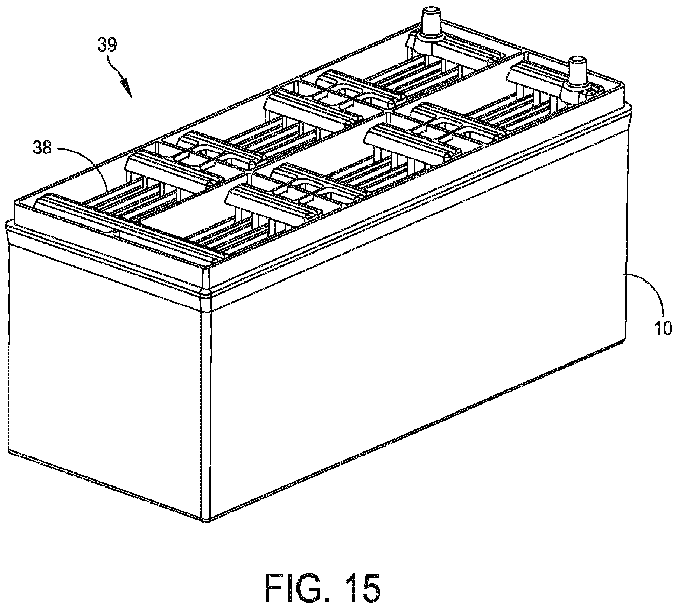

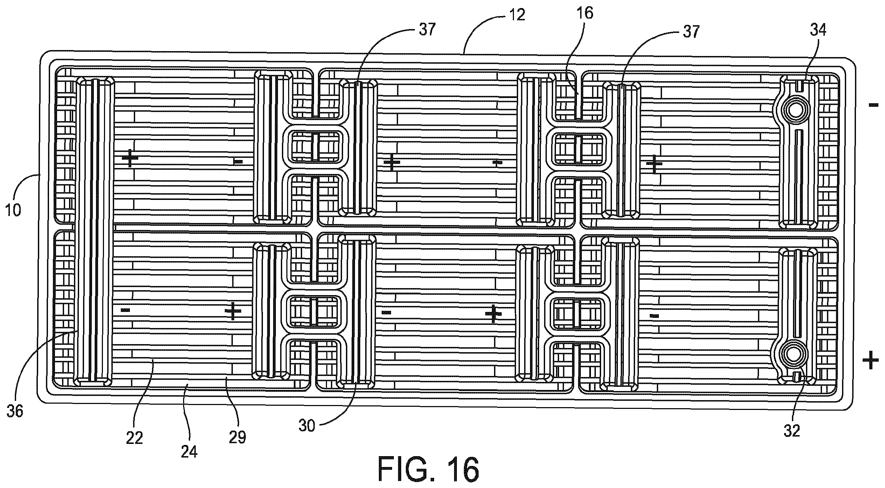

At step 204, the set of strap structures and the plurality of cells are placed inside the housing to form a partially assembled structure. The resulting structure 39 is illustrated in FIGS. 14 and 15. FIG. 16 illustrates a top plan view of the structure 39. Each strap structure may optionally have notches 37. Notches 37 may be used to define physical limits only. In some embodiments, each strap structure has no notch.

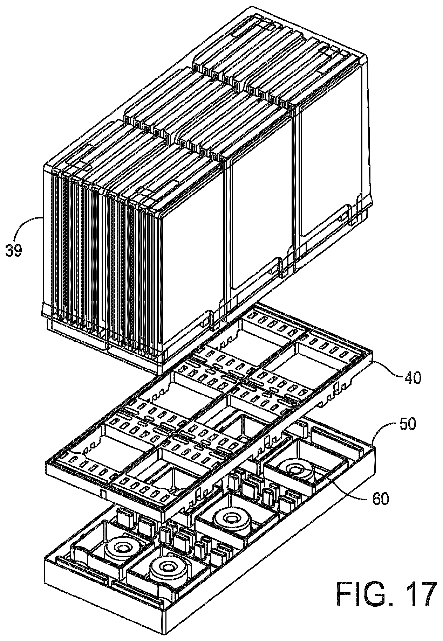

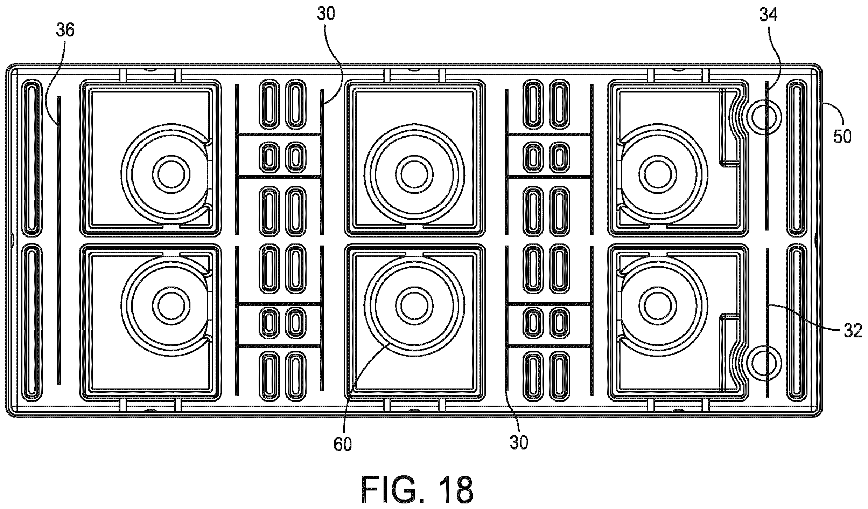

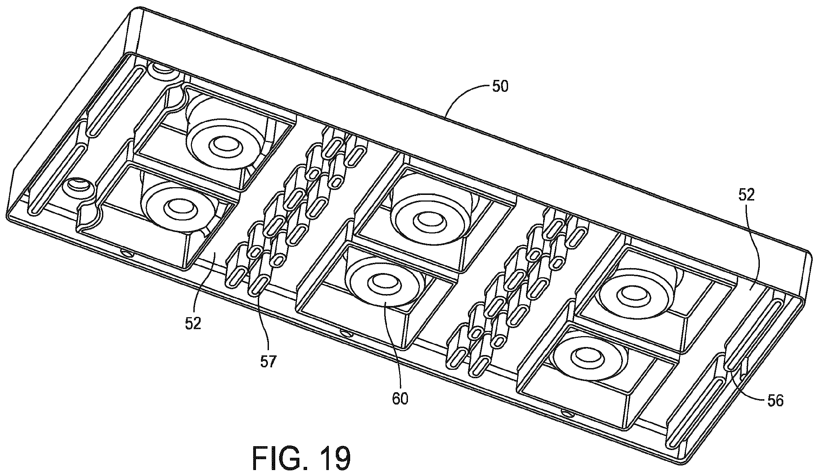

At step 206, the partially assembled structure 39 is placed upside down (i.e., inverted) to contact a back side of a cover. An encapsulant 40 is dispensed onto the back side of the cover 50, which is also placed upside down. FIG. 17 illustrates the structure at step 206. The encapsulant 40 is illustrated in the shape after cured in FIG. 17, and this is for illustration purpose only. At step 206, the encapsulant is dispensed in a form of a liquid or paste onto the back side of the cover 50, and the structure 39 is placed on the top of the cover with the encapsulant. FIG. 18 is a plan view illustrating the cover shown in FIG. 17, with the strap structures 30, 32, 34, and 26 projected onto the view. FIG. 19 is a perspective view illustrating the cover of FIG. 18. The exemplary cover 50 includes hollow supporting beams 56 and 57, and venting structures 60. The cover 50 defines hollow passages 52 configured to hold the encapsulant 40 and assure the encapsulant 40 to flow uniformly. The encapsulant 40 seal the housing 10 and the cover 50. The strap structures 45 are immersed in the encapsulant 40 above the cover, which is also wrapped with the encapsulant 40. The encapsulant 40 can be any suitable polymer material such as epoxy. Referring to FIG. 19, the passages 52 with encapsulant 40 accommodate the strap structures 45 including strap structures 30, 32, 34 and 36. The bridging lines 35 from the strap structures 30 also fit among the hollow supporting beams 57. The hollow supporting beams 56 and 57 may match with cell dividers 16 so that the cells and the cover are fixed in the correct locations and are not displaced. So the battery has good stability.

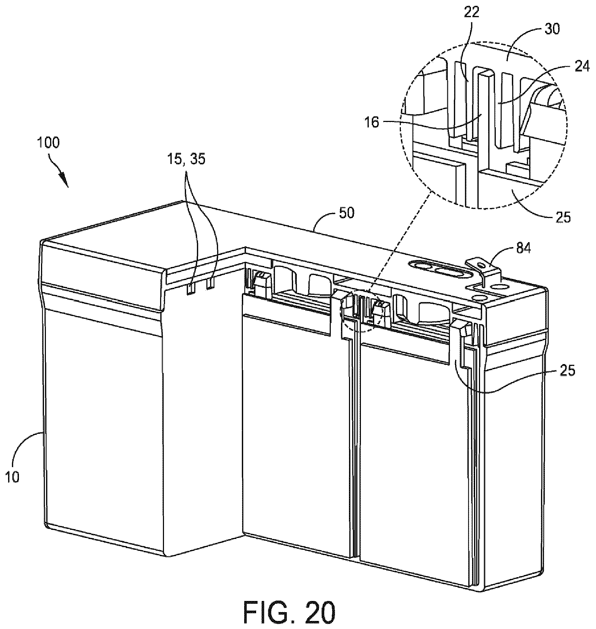

At step 208, the encapsulant 40 is cured when the components are assembled. A resulting battery 100 is formed. FIG. 20 is a partially cutaway perspective view illustrating the exemplary battery 100 of FIG. 1 after assembled. The cell dividers 16 separate cells including electrode plates 25 such as positive electrode plates 22 and negative electrode plates 24. The cell dividers 16 may also define notches 15 for fitting with bridging lines 35 in the first strap structures 30.

The set of strap structures including the first type of strap structure as described herein and the resulting battery provide many advantages. For example, each strap structure is casted or molded in one piece. The amount of lead or lead alloy used is reduced compared to that in the existing technology, in which an L-shaped through-wall welding process is used, and positive and negative electrodes need to be connected through the wall welding. As a comparison, in the existing L-shape through-wall welding process, positive and negative electrodes need to be connected through or onto a wall. The bonding may not be strong enough. An extra welding process is needed. The welding points tend to be corroded by the acid such as sulfuric acid used in the cells.

The method described herein eliminates the defective rate caused by the through-wall welding process because no welding process is used, and provides a more stable positive and negative connections. The one-piece casting technique used herein reduces the internal resistance of the connections and the battery, and can meet the requirements of higher powder discharge. The designs of the strap structures significantly improve the corrosion resistance of the strap structures and resulting batteries. The stability and durability are greatly improved. Furthermore, even if one portion is corroded, for example, one bridging line is corroded to cause breakage, the overall performance of the battery is not significantly affected. The resulting battery can be used for a vehicle, a golf cart, or any other applications. The battery may be rechargeable.

## Claims

1. A battery (100) comprising:
a housing (10);
a plurality of cells (20) disposed inside the housing (10), wherein each of the plurality of cells (20) comprises a plurality of positive electrode plates (22) and a plurality of negative electrode plates (24), and each respective electrode plate (25) has a respective tip (25a); and a set of strap structures (45) comprising one or more of a first strap structure (30), the first strap structure (30) comprising a positive strap line (31), a negative strap line (33), and at least two bridging lines (35) disposed between and connected with the positive strap line (31) and the negative strap line (33), the negative strap line (33) connected with respective tips (24a) of a plurality of negative electrode plates (24) in a first cell (20a), the positive strap line (31) connected with respective tips (22a) of a plurality of positive electrode plates (22) in a second cell (20b) different from the first cell (20a),
wherein the first strap structure (30) is a unitary molded structure.

2. The battery of claim 1, wherein the battery (100) is a lead acid battery.

3. The battery of claim 1 or 2, wherein the positive strap line (31) and the negative strap line (33) in the first strap structure (30) are parallel or substantially parallel to each other.

4. The battery of any of the preceding claims, wherein the negative strap line (33) has a notch on one side configured to fit with the respective tips (24a) of the plurality of negative electrode plates (24) in the first cell (20a), and the positive strap line (31) has a notch on one side configured to fit with the respective tips (22a) of the plurality of positive electrode plates (22) in the second cell (22b).

5. The battery of any of the preceding claims, wherein the at least two bridging lines (35) disposed between the positive strap line (31) and the negative strap line (33) are parallel or substantially parallel to each other.

6. The battery of any of the preceding claims, wherein the at least two bridging lines (35) comprises two, three, or four bridging lines.

7. The battery of any of the preceding claims, wherein the set of strap structures (45) further comprises a second strap structure (32) connected with a plurality of positive electrodes (22) in a starting cell (20a), and a third strap structure (34) connected with a plurality of negative electrodes (24) in one ending cell (20g), wherein the second strap structure (32) is connected with a positive terminal post (82) of the battery (100), and the third strap structure (34) is connected with a negative terminal post (84) of the battery (100).

8. The battery of any of the preceding claims, wherein the set of strap structures (45) further comprises a fourth strap structure (36) connected with respective tips of a plurality of negative electrode plates (24) and a plurality of positive electrode plates (22) from two adjacent cells.

9. The battery of claim 8, wherein the fourth strap structure (36) is at one end of the battery (100) opposite to that of the positive and negative terminal posts (82, 84) of the battery (100).

10. The battery of any of the preceding claims, wherein each of the set of strap structures (45) is molded from a material selected from the group consisting of lead, lead calcium tin, lead tin, or any combination thereof.

11. The battery of any of the preceding claims, wherein a plurality of cells (20) are six cells, and the set of strap structures (45) comprises four of the first strap structure.

12. A set of strap structures (45) comprising one or more strap structures and configured to be disposed in a battery (100) comprising a housing (10) and a plurality of cells (20) disposed inside the housing (10), wherein each of the plurality of cells (20) comprises a plurality of positive electrode plates (22) and a plurality of negative electrode plates (24), and each respective electrode plate (25) has a respective tip (25a), comprising:
a positive strap line (31), a negative strap line (33), and at least two bridging lines (35) disposed between and connected with the positive strap line (31) and the negative strap line (33), the negative strap line (33) configured to be connected with respective tips (24a) of a plurality of negative electrode plates (24) in a first cell (20a), the positive strap line (31) configured to be connected with respective tips (22a) of a plurality of positive electrode plates (22) in a second cell (20b) different from the first cell (20a).

13. The set of strap structures of claim 12, wherein the positive strap line (31) and the negative strap line (34) in the strap structure (30) are parallel or substantially parallel to each other.

14. A method (200) for forming the battery of claim 1, comprising steps of:
(202) assembling the set of strap structures onto the plurality of cells including connecting the negative strap line in the first strap structure with respective tips of a plurality of negative electrode plates in a first cell and connecting the positive strap line in the first strap structure respective tips of a plurality of positive electrode plates in a second cell different from the first cell;
(204) placing the set of strap structures and the plurality of cells inside the housing to form a partially assembled structure; and
(206) placing the partially assembled structure upside down to contact a back side of a cover (50), wherein an encapsulant is dispensed onto the back side of the cover (50); and curing the encapsulant so as to provide the battery.

## Patentansprüche

1. Batterie (100), die Folgendes umfasst:
ein Gehäuse (10);
eine Mehrzahl von Zellen (20), die innerhalb des Gehäuses (10) angeordnet sind, wobei jede der Mehrzahl von Zellen (20) eine Mehrzahl positiver Elektrodenplatten (22) und eine Mehrzahl negativer Elektrodenplatten (24) umfasst und jede jeweilige Elektrodenplatte (25) eine jeweilige Spitze (25a) aufweist; und einen Satz von Kopplungsbügelstrukturen (45), der eine oder mehrere einer ersten Kopplungsbügelstruktur (30) umfasst, wobei die erste Kopplungsbügelstruktur (30) eine positive Kopplungsbügelleitung (33), eine negative Kopplungsbügelleitung (31) und mindestens zwei Überbrückungsleitungen (35), die zwischen der positiven Kopplungsbügelleitung (31) und der negativen Kopplungsbügelleitung (33) angeordnet und mit diesen verbunden sind, umfasst, wobei die negative Kopplungsbügelleitung (33) mit jeweiligen Spitzen (24a) einer Mehrzahl negativer Elektrodenplatten (24) in einer ersten Zelle (20a) verbunden ist, wobei die positive Kopplungsbügelleitung (31) mit jeweiligen Spitzen (22a) einer Mehrzahl positiver Elektrodenplatten (22) in einer zweiten Zelle (20b), die sich von der ersten Zelle (20a) unterscheidet, verbunden ist,
wobei die erste Kopplungsbügelstruktur (30) eine einheitlich geformte Struktur ist.

2. Batterie nach Anspruch 1, wobei die Batterie (100) eine Bleibatterie ist.

3. Batterie nach Anspruch 1 oder 2, wobei die positive Kopplungsbügelleitung (31) und die negative Kopplungsbügelleitung (33) in der ersten Kopplungsbügelstruktur (30) parallel oder im Wesentlichen parallel zueinander sind.

4. Batterie nach einem der vorhergehenden Ansprüche, wobei die negative Kopplungsbügelleitung (33) auf einer Seite eine Kerbe aufweist, die ausgelegt ist, zu den jeweiligen Spitzen (24a) der Mehrzahl negativer Elektrodenplatten (24) in der ersten Zelle (20a) zu passen, und die positive Kopplungsbügelleitung (31) auf einer Seite eine Kerbe aufweist, die ausgelegt ist, zu den jeweiligen Spitzen (22a) der Mehrzahl positiver Elektrodenplatten (22) in der zweiten Zelle (22b) zu passen.

5. Batterie nach einem der vorhergehenden Ansprüche, wobei die mindestens zwei Überbrückungsleitungen (35), die zwischen der positiven Kopplungsbügelleitung (31) und der negativen Kopplungsbügelleitung (33) angeordnet sind, parallel oder im Wesentlichen parallel zueinander sind.

6. Batterie nach einem der vorhergehenden Ansprüche, wobei die mindestens zwei Überbrückungsleitungen (35) zwei, drei oder vier Überbrückungsleitungen umfassen.

7. Batterie nach einem der vorhergehenden Ansprüche, wobei der Satz von Kopplungsbügelstrukturen (45) ferner eine zweite Kopplungsbügelstruktur (32), die mit einer Mehrzahl positiver Elektroden (22) in einer Anfangszelle (20a) verbunden ist, und eine dritte Kopplungsbügelstruktur (34), die mit einer Mehrzahl negativer Elektroden (24) in einer Endzelle (20g) verbunden ist, umfasst, wobei die zweite Kopplungsbügelstruktur (32) mit einer positiven Batteriepolklemme (82) der Batterie (100) verbunden ist und die dritte Kopplungsbügelstruktur (34) mit einer negativen Batteriepolklemme (84) der Batterie (100) verbunden ist.

8. Batterie nach einem der vorhergehenden Ansprüche, wobei der Satz von Kopplungsbügelstrukturen (45) ferner eine vierte Kopplungsbügelstruktur (36) umfasst, die mit jeweiligen Spitzen einer Mehrzahl negativer Elektrodenplatten (24) und einer Mehrzahl positiver Elektrodenplatten (22) von zwei benachbarten Zellen verbunden ist.

9. Batterie nach Anspruch 8, wobei sich die vierte Kopplungsbügelstruktur (36) an einem Ende der Batterie (100), das dem der positiven und der negativen Batteriepolklemme (82, 84) der Batterie (100) gegenüberliegt, befindet.

10. Batterie nach einem der vorhergehenden Ansprüche, wobei jede des Satzes von Kopplungsbügelstrukturen (45) aus einem Material geformt ist, das aus der Gruppe ausgewählt ist, die aus Blei, Blei-Calcium-Zinn, Blei-Zinn oder einer beliebigen Kombination davon besteht.

11. Batterie nach einem der vorhergehenden Ansprüche, wobei eine Mehrzahl von Zellen (20) sechs Zellen sind und der Satz von Kopplungsbügelstrukturen (45) vier der ersten Kopplungsbügelstruktur umfasst.

12. Satz von Kopplungsbügelstrukturen (45), der eine oder mehrere Kopplungsbügelstrukturen umfasst und dazu ausgelegt ist, in einer Batterie (100), die ein Gehäuse (10) und eine Mehrzahl von Zellen (20), die innerhalb des Gehäuses (10) angeordnet sind, umfasst, angeordnet zu werden, wobei jede der Mehrzahl von Zellen (20) eine Mehrzahl positiver Elektrodenplatten (22) und eine Mehrzahl negativer Elektrodenplatten (24) umfasst und jede jeweilige Elektrodenplatte (25) eine jeweilige Spitze (25a) aufweist, wobei der Satz von Kopplungsbügelstrukturen Folgendes umfasst:
eine positive Kopplungsbügelleitung (31), eine negative Kopplungsbügelleitung (33) und mindestens zwei Überbrückungsleitungen (35), die zwischen der positiven Kopplungsbügelleitung (31) und der negativen Kopplungsbügelleitung (33) angeordnet und mit diesen verbunden sind, wobei die negative Kopplungsbügelleitung (33) dazu ausgelegt ist, mit jeweiligen Spitzen (24a) einer Mehrzahl negativer Elektrodenplatten (24) in einer ersten Zelle (20a) verbunden zu werden, wobei die positive Kopplungsbügelleitung (31) dazu ausgelegt ist, mit jeweiligen Spitzen (22a) einer Mehrzahl positiver Elektrodenplatten (22) in einer zweiten Zelle (20b), die sich von der ersten Zelle (20a) unterscheidet, verbunden zu werden.

13. Satz von Kopplungsbügelstrukturen nach Anspruch 12, wobei die positive Kopplungsbügelleitung (31) und die negative Kopplungsbügelleitung (34) in der Kopplungsbügelstruktur (30) parallel oder im Wesentlichen parallel zueinander sind.

14. Verfahren (200) zum Bilden der Batterie nach Anspruch 1, wobei das Verfahren die folgenden Schritte umfasst:
(202) Montieren des Satzes von Kopplungsbügelstrukturen auf der Mehrzahl von Zellen, einschließlich Verbinden der negativen Kopplungsbügelleitung in der ersten Kopplungsbügelstruktur mit jeweiligen Spitzen einer Mehrzahl negativer Elektrodenplatten in einer ersten Zelle und Verbinden der positiven Kopplungsbügelleitung in der ersten Kopplungsbügelstruktur mit jeweiligen Spitzen einer Mehrzahl positiver Elektrodenplatten in einer zweiten Zelle, die sich von der ersten Zelle unterscheidet;
(204) Platzieren des Satzes von Kopplungsbügelstrukturen und der Mehrzahl von Zellen innerhalb des Gehäuses, um eine teilweise montierte Struktur zu bilden; und
(206) Platzieren der teilweise montierten Struktur verkehrt herum, um eine Rückseite einer Abdeckung (50) zu kontaktieren, wobei ein Verkapselungsstoff auf die Rückseite der Abdeckung (50) abgegeben wird; und Aushärten des Verkapselungsstoffs, um die Batterie bereitzustellen.

## Revendications

1. Batterie (100) comprenant :
un boitier (10) ;
une pluralité de cellules (20) disposées à l'intérieur du boîtier (10), chacune de la pluralité de cellules (20) comprenant une pluralité de plaques d'électrode positive (22) et une pluralité de plaques d'électrode négative (24), et chaque plaque d'électrode (25) respective présentant une extrémité (25a) respective ; et un ensemble de structures de barrette (45) comprenant au moins une première structure de barrette (30), la première structure de barrette (30) comprenant un segment de barrette positif (31), un segment de barrette négatif (33) et au moins deux segments de pontage (35) disposés entre le segment de barrette positif (31) et le segment de barrette négatif (33) et connectés à ceux-ci, le segment de barrette négatif (33) étant connecté à des extrémités (24a) respectives d'une pluralité de plaques d'électrode négative (24) dans une première cellule (20a), le segment de barrette positif (31) étant connecté à des extrémités (22a) respectives d'une pluralité de plaques d'électrode positive (22) dans une deuxième cellule (20b) différente de la première cellule (20a),
dans laquelle la première structure de barrette (30) étant une structure moulée d'un seul tenant.

2. Batterie selon la revendication 1, la batterie (100) étant une batterie au plomb-acide.

3. Batterie selon la revendication 1 ou 2, dans laquelle le segment de barrette positif (31) et le segment de barrette négatif (33) dans la première structure de barrette (30) sont parallèles ou sensiblement parallèles l'un à l'autre.

4. Batterie selon l'une quelconque des revendications précédentes, dans laquelle le segment de barrette négatif (33) présente, sur un côté, une encoche configurée pour s'adapter aux extrémités (24a) respectives de la pluralité de plaques d'électrode négative (24) dans la première cellule (20a), et le segment de barrette positif (31) présente, sur un côté, une encoche configurée pour s'adapter aux extrémités (22a) respectives de la pluralité de plaques d'électrode positive (22) dans la deuxième cellule (22b).

5. Batterie selon l'une quelconque des revendications précédentes, dans laquelle les au moins deux segments de pontage (35) disposés entre le segment de barrette positif (31) et le segment de barrette négatif (33) sont parallèles ou sensiblement parallèles l'un à l'autre.

6. Batterie selon l'une quelconque des revendications précédentes, dans laquelle les au moins deux segments de pontage (35) comprennent deux, trois ou quatre segments de pontage.

7. Batterie selon l'une quelconque des revendications précédentes, dans laquelle l'ensemble de structures de barrette (45) comprend en outre une deuxième structure de barrette (32) connectée à une pluralité d'électrodes positives (22) dans une cellule de début (20a), et une troisième structure de barrette (34) connectée à une pluralité d'électrodes négatives (24) dans une cellule de fin (20g), la deuxième structure de barrette (32) étant connectée à un plot de borne positive (82) de la batterie (100), et la troisième structure de barrette (34) étant connectée à un plot de borne négative (84) de la batterie (100).

8. Batterie selon l'une quelconque des revendications précédentes, dans laquelle l'ensemble de structures de barrette (45) comprend en outre une quatrième structure de barrette (36) connectée à des extrémités respectives d'une pluralité de plaques d'électrode négative (24) et d'une pluralité de plaques d'électrode positive (22) appartenant à deux cellules adjacentes.

9. Batterie selon la revendication 8, dans laquelle la quatrième structure de barrette (36) se trouve à une extrémité de la batterie (100) opposée à celle des plots de borne positive et de borne négative (82, 84) de la batterie (100).

10. Batterie selon l'une quelconque des revendications précédentes, dans laquelle chacune de l'ensemble de structures de barrette (45) est moulée à partir d'un matériau choisi dans le groupe constitué par le plomb, un alliage plomb-calcium-étain, un alliage plomb-étain, ou toute combinaison de ceux-ci.

11. Batterie selon l'une quelconque des revendications précédentes, dans laquelle une pluralité de cellules (20) est constituée de six cellules, et l'ensemble de structures de barrette (45) comprend quatre exemplaires de la première structure de barrette.

12. Ensemble de structures de barrette (45) comprenant une ou plusieurs structures de barrette et configuré pour être disposé dans une batterie (100) comprenant un boîtier (10) et une pluralité de cellules (20) disposées à l'intérieur du boîtier (10), chacune de la pluralité de cellules (20) comprenant une pluralité de plaques d'électrode positive (22) et une pluralité de plaques d'électrode négative (24), et chaque plaque d'électrode (25) respective présentant une extrémité (25a) respective, comprenant :
un segment de barrette positif (31), un segment de barrette négatif (33) et au moins deux segments de pontage (35) disposés entre le segment de barrette positif (31) et le segment de barrette négatif (33) et connectés à ceux-ci, le segment de barrette négatif (33) étant configuré pour être connecté à des extrémités (24a) respectives d'une pluralité de plaques d'électrode négative (24) dans une première cellule (20a), le segment de barrette positif (31) étant configuré pour être connecté à des extrémités (22a) respectives d'une pluralité de plaques d'électrode positive (22) dans une deuxième cellule (20b) différente de la première cellule (20a).

13. Ensemble de structures de barrette selon la revendication 12, dans lequel le segment de barrette positif (31) et le segment de barrette négatif (34) dans la structure de barrette (30) sont parallèles ou sensiblement parallèles l'un à l'autre.

14. Procédé (200) de formation de la batterie selon la revendication 1, comprenant les étapes suivantes :
(202) assemblage de l'ensemble de structures de barrette sur la pluralité de cellules, comportant la connexion du segment de barrette négatif dans la première structure de barrette à des extrémités respectives d'une pluralité de plaques d'électrode négative dans une première cellule et la connexion du segment de barrette positif dans la première structure de barrette à des extrémités respectives d'une pluralité de plaques d'électrode positive dans une deuxième cellule différente de la première cellule ;
(204) mise en place de l'ensemble de structures de barrette et de la pluralité de cellules à l'intérieur du boîtier afin de former une structure partiellement assemblée ; et
(206) mise à l'envers de la structure partiellement assemblée dans le but de la mettre en contact avec une face arrière d'un couvercle (50), un matériau d'encapsulation étant déposé sur le côté arrière du couvercle (50) ; et durcissement du matériau d'encapsulation de manière à obtenir la batterie.
